# EUROPEAN PATENT APPLICATION

(11) **EP 4 601 360 A1**
(43) Date of publication of application: **13.08.2025**
(21) Application number: 23912543.8
(22) Date of filing: 03.11.2023
(51) Int. Cl.: H04W 28/16, H04W 56/00, H04W 72/04, H04W 72/52, H04W 88/08, H04W 72/27, H04W 92/20

(54) **METHOD AND DEVICE FOR TRANSMITTING OR RECEIVING DATA DURING SCALING IN WIRELESS COMMUNICATION SYSTEM**

(30) Priority: 26.12.2022 KR 20220184835; 08.06.2023 KR 20230073727
(71) Applicant: Samsung Electronics Co., Ltd., Suwon-si, Gyeonggi-do 16677 (KR)
(72) Inventor: PARK, Hanjung, Suwon-si, Gyeonggi-do 16677 (KR); AHN, Heungseop, Suwon-si, Gyeonggi-do 16677 (KR); KWON, Joonhwan, Suwon-si, Gyeonggi-do 16677 (KR)
(74) Representative: Appleyard Lees IP LLP
(86) International application number: PCT/KR2023/017558
(87) International publication number: WO 2024/143864

(57) **Abstract**

Provided is a method of operating a first distributed unit (DU) in a wireless network system. The first DU may monitor radio resource allocation status information allocated to the first DU, and determine changed radio resource allocation information based on the radio resource allocation status information. The first DU may identify synchronization time information for applying the changed radio resource allocation information. The first DU may transmit, to a second DU, a message for synchronization including the synchronization time information and the changed radio resource allocation information. The first DU may perform transmission or reception of a message with a radio unit (RU) connected to the first DU 10 and the second DU, based on the message for synchronization.

## Description

### Technical Field

An embodiment may provide a method and device for transmitting and receiving data during scaling in a wireless communication system.

### Background Art

In related-art radio access networks (RANs), distributed units (DUs) and cell sites are connected in a 1:N configuration, where the processing capacity of the DU is determined based on the maximum traffic that the cell site may handle. However, the time during which maximum traffic occurs is limited, and outside of this time, a significant number of DU resources may remain unused. Therefore, the resources of DUs may not be efficiently used.

Virtualized DU (vDU) pooling may refer to a technology that may reduce the number of servers required to build a RAN system by decoupling the related-art 1:N relationship between DUs and cell sites (a set of radio units (RUs)) and pooling and virtualizing the DUs. (capital expenditure (CAPEX) reduction) For example, before vDU pooling, four DUs, that is, four servers, are required, but after vDU pooling, it may be possible to process traffic coming from four cell sites by using only three servers. As such, with vDU pooling, only three physical servers actually operate, and thus, power consumption may also be saved compared to the related-art RAN system using four physical servers. (operational expenditure (OPEX) reduction)

While the above example describes only pooling of DUs, centralized units (CUs) may also be pooled like DUs. A RAN system that lowers CAPEX and OPEX by pooling and virtualizing DUs and CUs in this manner is referred to as a virtualized RAN (vRAN) system.

There is a growing need for a method for efficiently transmitting and receiving data in vRAN environments.

### Disclosure of Invention

### Solution to Problem

Provided is a method of operating a first distributed unit (DU) in a wireless network system. The first DU may monitor radio resource allocation status information allocated to the first DU, and determine changed radio resource allocation information based on the radio resource allocation status information. The first DU may identify synchronization time information for applying the changed radio resource allocation information. The first DU may transmit, to a second DU, a message for synchronization including the synchronization time information and the changed radio resource allocation information. The first DU may perform transmission or reception of a message with a radio unit (RU) connected to the first DU and the second DU, based on the message for synchronization.

### Brief Description of Drawings

FIG. 1 is a diagram for describing a wireless communication system according to an embodiment.
FIG. 2 is a conceptual diagram for describing a method of operating a first distributed unit (DU), according to an embodiment.
FIG. 3 is a flowchart of a method of operating a first DU 10, according to an embodiment.
FIG. 4 is a flowchart of a method of operating a second DU 20, according to an embodiment.
FIG. 5 is a diagram illustrating a flowchart of message transmission/reception of a first DU, according to an embodiment.
FIG. 6 is a diagram for describing a method, performed by a first DU and a second DU, of operating based on changed radio resource allocation information and synchronization time information, according to an embodiment.
FIG. 7 is a diagram illustrating a flowchart of message transmission/reception of a second DU, according to an embodiment.
FIG. 8A is a diagram for describing downlink radio resources according to an embodiment.
FIG. 8B is a diagram for describing uplink radio resources according to an embodiment.
FIG. 9 is a diagram illustrating a structure of bitmap-type changed radio resource allocation information, according to an embodiment.
FIG. 10 is a diagram illustrating a structure of changed radio resource allocation information including information about allocated resource regions, according to an embodiment.
FIG. 11 is a diagram illustrating a structure of changed radio resource allocation information including a reference value, according to an embodiment.
FIG. 12 is a diagram for describing synchronization time information including preset time information, according to an embodiment.
FIG. 13 is a diagram for describing dynamically identified synchronization time information according to an embodiment.
FIG. 14 is a diagram for describing synchronization time information determined by a second DU in response to a request from a first DU, according to an embodiment.
FIG. 15 is a block diagram illustrating a configuration of a first DU.
FIG. 16 is a block diagram illustrating a configuration of a second DU.

### Mode for the Invention

As used herein, the expression "at least one of a, b, or c" may indicate only a, only b, only c, both a and b, both a and c, both b and c, all of a, b, and c, or variations thereof.

Although the terms used herein are selected from among common terms that are currently widely used in consideration of their functions in the present disclosure, the terms may be different according to an intention of one of ordinary skill in the art, a precedent, or the advent of new technology. In addition, in certain cases, there are also terms arbitrarily selected by the applicant, and in this case, the meaning thereof will be defined in detail in the description. Therefore, the terms used herein are not merely designations of the terms, but the terms are defined based on the meaning of the terms and content throughout the present disclosure.

The singular expression may also include the plural meaning as long as it is not inconsistent with the context. All the terms used herein, including technical and scientific terms, may have the same meanings as those generally understood by those of skill in the art related to the present specification. In addition, although the terms such as 'first' or 'second' may be used in the present specification so as to describe various elements, these elements should not be limited by the terms. These terms are only used to distinguish one element from another element.

Throughout the present specification, when a part "includes" a component, it means that the part may additionally include other components rather than excluding other components as long as there is no particular opposing recitation. In addition, as used herein, the terms such as "...er (or)", "... unit", "... module", etc., denote a unit that performs at least one function or operation, which may be implemented as hardware or software or a combination thereof.

Hereinafter, embodiments of the present disclosure will be described in detail with reference to the accompanying drawings to allow those of skill in the art to easily carry out the embodiments. The present disclosure may, however, be embodied in many different forms and should not be construed as being limited to an embodiment set forth herein. In addition, in order to clearly describe the present disclosure, portions that are not relevant to the description of the present disclosure are omitted, and similar reference numerals are assigned to similar elements throughout the specification. In addition, reference numerals used in each drawing are only for describing the drawing, and different reference numerals used in different drawings are not for indicating different elements. Hereinafter, the present disclosure will be described in detail with reference to the accompanying drawings.

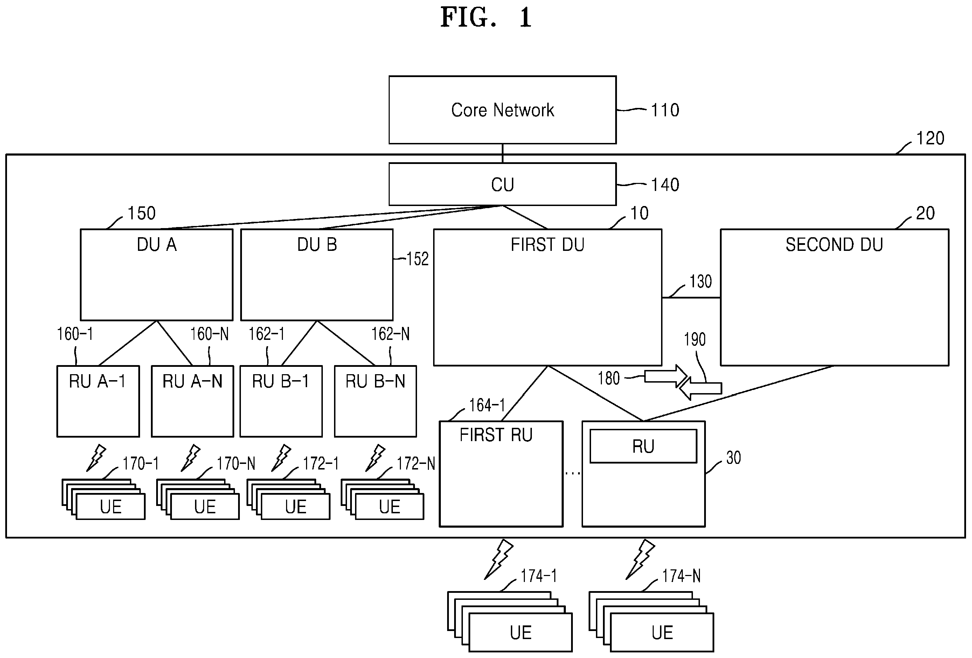

FIG. 1 is a diagram for describing a wireless communication system according to an embodiment.

In the present disclosure, the wireless communication system may include a core network 110 and a radio access network (RAN) 120.

In the present disclosure, the RAN 120 may include one or more radio units (RUs) 160-1, 160-N, 162-1, 162-N, 164-1, and 164-N, one or more distributed units (DUs) 150, 152, 10, and 20, and a centralized unit (CU) 130. In the present disclosure, the RAN 120 may include a virtualized RAN (vRAN) system 110, but is not limited thereto. For example, the RAN 120 may include a 5G system (5GS), a 4G system (4GS), or other wireless communication systems, and may also refer to wireless communication systems developed in the future.

The CU 140 may refer to an entity that performs functions of some of protocol layers of a network. For example, the CU 140 may refer to an entity that performs network functions of a radio resource control (RRC) layer and a packet data convergence protocol (PDCP) layer. However, the functions of some layers that may be processed by the CU 140 are not limited to the above-described RRC layer and PDCP layer. For example, the CU 140 may refer to a virtualized CU (vCU) in the vRAN system, but is not limited thereto.

One CU 140 may be connected to N DUs, where N may be any integer greater than 1. The CU 140 and the DUs may be connected to each other via an interface. For example, an interface between the CU 140 and a first DU 10 may be an F1 interface.

The RAN 120 may include a DU A 150-1, a DU B 150-2, and the first DU 10. The DU A 150-1 and the DU B 150-2 may perform the same function as the first DU 10, but the descriptions below will focus on the first DU 10 as an example.

The first DU 10 may refer to an entity that performs functions of some of protocol layers of the network, excluding some layers performed by the CU 140. For example, the first DU 10 may refer to an entity that performs network functions (e.g., baseband functions) of a radio link control (RLC) layer, a medium access control (MAC) layer, and a physical (PHY) layer. However, the functions of some layers that may be processed by the first DU 10 are not limited to the above-described RLC layer, MAC layer, and PHY layer. For example, the first DU 10 may refer to a virtualized DU (vDU) in the vRAN system, but is not limited thereto. For example, the first DU 10 may correspond to a processing pod, a component module, any processing operation unit, any deployment unit performing processing, software, etc. For example, the first DU 10 may correspond to one server.

The DU A 150 may be connected to an RU A-1 160-1 and an RU A-N 160-N, and the DU B 152 may be connected to an RU B-1 162-1 and an RU B-N 162-N.

One first DU 10 may be connected to N RUs, where N may be any integer greater than 1. The first DU 10 may be connected to a first RU 164-1 and an RU 30 via interfaces, and for example, the interface between the first DU 10 and the RU 30 may be a fronthaul interface.

The RU A-1 160-1, the RU A-N 160-N, the RU B-1 162-1, the RU B-N 162-N, and the first RU 164-1 may perform the same function as the RU 30, and the descriptions below will focus on the RU 30 as an example.

The RU 30 may refer to an entity that performs some of the functions of the PHY layer, excluding those performed by the first DU 10. For example, the first DU 10 may perform a function of a high-PHY layer, and the RU 30 may perform a function of a low-PHY layer. For example, the RU 30 may refer to a virtualized RU (vRU) in the vRAN system, but is not limited thereto.

A vDU scaling method that dynamically scales in or scales out the first DU 10 based on current traffic conditions to efficiently use server resources may be used. When scaling is performed, the RAN 120 may further include a second DU 20.

For example, the first DU 10 may refer to the N-th DU and may correspond to a source vDU. The second DU 20 may refer to the N'-th DU and may correspond to a target vDU. The first DU 10 and the second DU 20 may be connected to each other via an inter-DU interface (Xd interface) 130.

When the amount of data processed by the first DU 10 increases, a new DU may be used for the processing to prevent excessive traffic processing load on the first DU 10. In this case, the RU 30 associated with a particular cell may be migrated to the new DU.

In the present disclosure, scale-out 180 may refer to the addition of the second DU 20 to a DU pool. For example, when the amount of traffic to be processed by the first DU 10 included in the DU pool increases, the second DU 20 may be added. The addition of the second DU 20 to the DU pool may mean that a processing pod corresponding to the second DU 20 is added to the DU pool. For example, the addition of the second DU 20 to the DU pool may mean that an additional server capable of processing data begins operation. When the capacity or performance of the first DU 10 (e.g., an existing server) to process data reaches its limit, the second DU 20 (as a non-limiting example, a server with similar specifications) may be added to the communication system by using scale-out.

In the present disclosure, scale-in 190 may refer to the removal of the second DU 20 included in the DU pool. For example, when the amount of traffic to be processed by the DUs included in the DU pool decreases, the second DU 20 may be removed from the DU pool. The removal of the second DU 20 from the DU pool may mean that the processing pod corresponding to the second DU 20 is removed. For example, the removal of the second DU 20 from the DU pool may mean that the server processing data ceases the operation. By using scale-in, the number of servers that are no longer required to operate may be reduced, and resources may be saved.

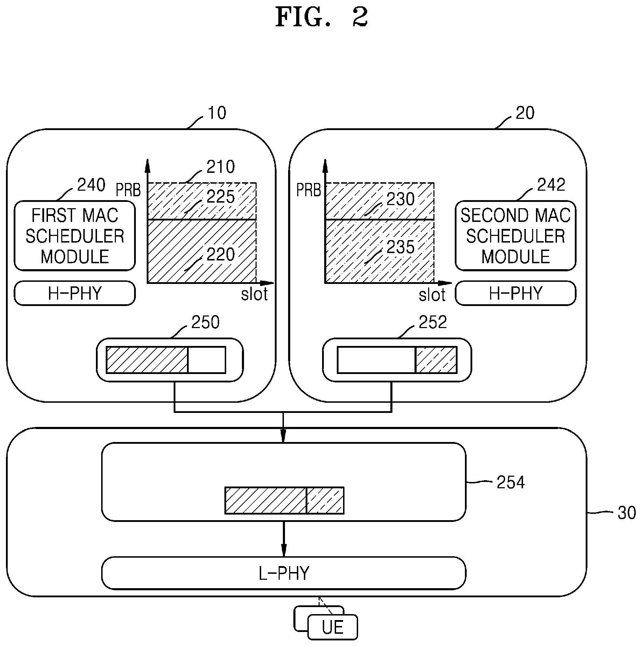

FIG. 2 is a conceptual diagram for describing a method of operating a first DU, according to an embodiment.

As described above, the first DU 10 and the second DU 20 may be installed as software within a server. When the data processing amount occurring in the RU 30 connected to the first DU 10 increases, the scale-out 180 may be performed such that user equipments (UEs) included in a cell where the data processing amount increases may be processed by the second DU 20. When the scale-out 180 is performed, one RU 30 may have been connected to one or more UEs (e.g., hundreds of UEs), and thus, it may be difficult for all UEs included in the RU 30 previously processed by the first DU 10 to be migrated to the second DU 20 at once. Thus, the first DU 10 and the second DU 20 need to transmit data to the RU 30 while changing allocation of radio resources in consideration of the amount of data to be processed.

In the present disclosure, the data processing amount may include a throughput, which is the amount of data transmittable per unit time, and may include a value that increases according to the number of UEs managed or processed by the DU described in the present disclosure. In the present disclosure, the data processing amount may include the amount of data generated in UEs to be processed by the DU, the amount of data to be processed, the amount of communication, the amount of resources, the number of UEs to be processed, and the like.

In the present disclosure, radio resources 210 may refer to resources configured with a frequency domain and a time domain used for transmission and reception of data, and may also be referred to as air resources, wireless radio resources, or the like, but are not limited to these terms. As more radio resources are allocated, more data may be transmitted and received, and the data transmission and reception rates may increase.

For example, before the scale-out 180 is performed, the first DU 10 may manage the radio resources 210. In addition, during the scale-out 180 being performed, the radio resources 210 may be divided into a 1-1st resource region 220 allocated to the first DU 10, and a 2-1st resource region 230 allocated to the second DU 20. The first DU 10 may transmit and receive data to and from the RU 30 by using the 1-1st resource region 220, and the second DU 20 may transmit and receive data to and from the RU 30 by using the 2-1st resource region 230.

For example, during the scale-out 180 being performed, when data generated from UEs that were processed by the first DU 10 is migrated to the second DU 20 and then processed, a change in allocation of resources that were allocated to the first DU 10 and the second DU 20 may be required.

The resource region allocated to each DU (e.g., the 1-1st resource region 220 or the 2-1st resource region 230) may increase in proportion to the amount of data to be processed by the corresponding DU. During the scale-out 180, as the amount of data processed by the first DU 10 decreases and the amount of data to be processed by the second DU 20 increases, the 1-1st resource region 220 corresponding to the amount of data processed by the first DU 10 may decrease, and the 2-1st resource region 230 corresponding to the amount of data processed by the second DU 20 may increase. On the contrary, during the scale-out 180, as the amount of data processed by the first DU 10 decreases and the amount of data to be processed by the second DU 20 increases, a 1-2nd resource region 225 that is not allocated to the first DU 10 may increase, and a 2-2nd resource region 235 that is not allocated to the second DU 20 may decrease.

When a margin region is included between the 1-1st resource region 220 and the 2-1st resource region 230 to prevent the 1-1st resource region 220 and the 2-1st resource region 230 from overlapping with each other, there is an issue of wasting expensive resources. Thus, to allocate the radio resources 210 to the first DU 10 and the second DU 20 without waste, a method of setting changed radio resource allocation information is required.

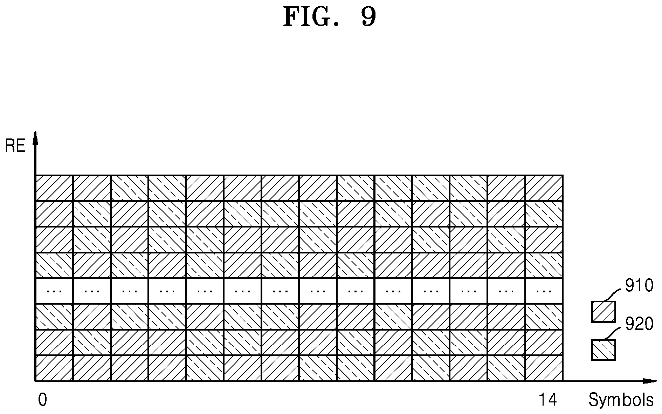

In the present disclosure, the changed radio resource allocation information may refer to resource information generated in consideration of allocating resources to at least two DUs (e.g., the first DU 10 and the second DU 20) according to a change in the amount of data processed by each DU during scaling (e.g., scale-out or scale-in) being performed. The changed radio resource allocation information may be generated such that resources allocated to at least two DUs do not overlap each other and a collision does not occur. In addition, the changed radio resource allocation information may be generated such that resources may be set for each DU in proportion to the amount of data processed by the DU. In the present disclosure, the changed radio resource allocation information may be referred to as radio resource allocation information. The changed radio resource allocation information will be described below with reference to FIGS. 9 to 11.

When the 1-1st resource region 220 and the 2-1st resource region 230 overlap each other, a UE using a frequency band of the overlapping region may receive erroneous data or may be unable to receive data. To prevent errors in data transmitted to UEs, a time point when the first DU 10 uses the changed resource region 220 allocated to the first DU 10 and a time point when the second DU 20 uses the changed resource region 230 allocated to the second DU 20 need to precisely coincide with each other. Thus, a method of setting synchronization time information for the first DU 10 and the second DU 20 to apply the changed radio resource allocation information at the same time is required.

In the present disclosure, the synchronization time information may include information about a time that is set such that times when at least two DUs (e.g., the first DU 10 and the second DU 20) connected to the same RU 30 transmit messages to the RU 30 or receive messages from the RU 30 by using the changed radio resource allocation information coincide with each other. As a non-limiting example, in a case in which resource times in a wireless communication system is defined by frames and slots, a time point when the first DU 10 uses the changed 1-1st resource region 220 (i.e., a frame and a slot) and a time point when the second DU 20 uses the changed 2-1st resource region 230 (i.e., a frame and a slot) need to coincide with each other. Thus, in this case, the synchronization time information may include frame information and slot information.

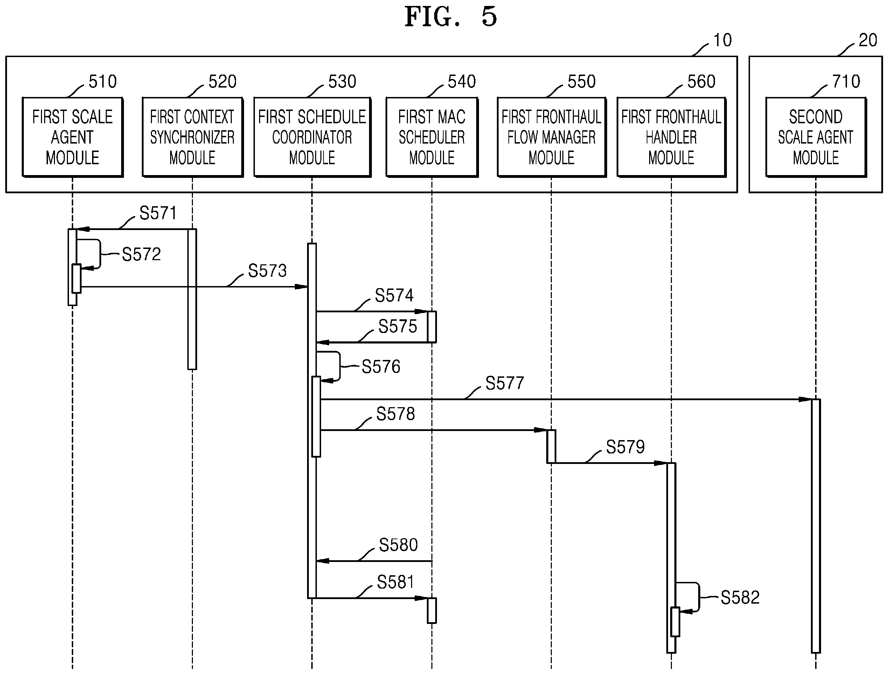

In order for the respective DUs to operate at the same time based on the changed radio resource allocation information, the changed radio resource allocation information and the synchronization time information need to be shared with and configured on the first DU 10 and the second DU 20, which are installed on different servers. For example, synchronization of operations between MAC scheduler modules and synchronization of operations between fronthaul handler modules may be required. The operations of the modules will be described in more detail below with reference to FIG. 5.

In the present disclosure, the MAC scheduler module may include a module that performs a function of a scheduler among functions of a MAC layer. The MAC scheduler module may allocate resource blocks in a frequency domain and control allocation of uplink resources and downlink resources for symbols and slots in a time domain, and may include a module that manages radio resources. The first DU 10 may include a first MAC scheduler module 240, and the second DU 20 may include a second MAC scheduler module 242. In order for the first DU 10 and the second DU 20 to use the changed radio resource allocation information at the same time, synchronization of operations of the first MAC scheduler module 240 and the second MAC scheduler module 242 may be required.

In the present disclosure, a fronthaul handler module of a DU may generate packets of data to be transmitted to the RU 30, and may include a module that transmits the generated packets to the RU 30 and receives packets generated from the RU 30. The first DU 10 may include a first fronthaul handler module 250, the second DU 20 may include a second fronthaul handler module 252, and the RU 30 may include a third fronthaul handler module 254. The fronthaul handler modules operates in conjunction with the MAC scheduler modules to receive shared allocation information about UEs such that the DUs and the RU may transmit and receive only data within a resource region to which the UEs are allocated. For example, the first fronthaul handler module 250 may receive allocation information about UEs from the first MAC scheduler module 240, such that the first DU 10 may transmit, to the RU 30, only data within a resource region to which the UEs are allocated. In addition, the second fronthaul handler module 252 may receive allocation information about UEs from the second MAC scheduler module 242, such that the second DU 20 may transmit, to the RU 30, only data within a resource region to which the UEs are allocated.

In the present disclosure, that the operations of the first DU 10 and the second DU 20 are synchronized may mean that at least two DUs (e.g., the first DU 10 and the second DU 20) connected to the same RU 30 transmit messages to the RU 30 or receive messages from the RU 30 by using non-overlapping radio resources based on the changed radio resource allocation information, wherein times when the at least two DUs connected to the same RU 30 transmit or receive the messages coincide with each other based on the synchronization time information. In this case, the fronthaul handler module 254 of the RU 30 may obtain data by using packets received from the first DU 10 and the second DU 20, without needing to determine which region is valid among the packets transmitted by the first DU 10 and the second DU 20.

Hereinafter, a method, performed by the first DU 10, of determining changed radio resource allocation information and synchronization time information and generating a message for synchronization such that at least two DUs (e.g., the first DU 10 and the second DU 20) connected to the same RU 30 may operate in synchronization will be described. In the present disclosure, the message for synchronization may refer to a message transmitted from the first DU 10 to the second DU 20 such that resources allocated to the respective DUs may be applied in the DUs at the same time. The message for synchronization may be a message including at least one of synchronization time information, changed radio resource allocation information, or common signal indication information. The message for synchronization will be described in more detail below with reference to [Table 1].

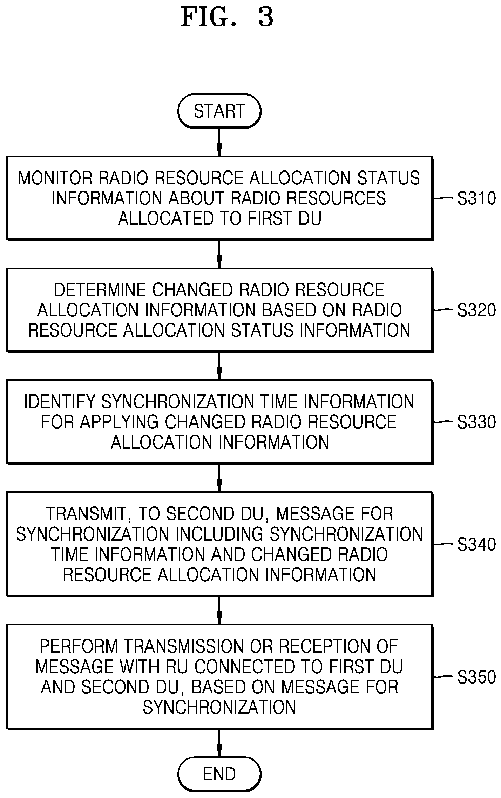

FIG. 3 is a flowchart of a method of operating the first DU 10, according to an embodiment.

In operation S310, the first DU 10 may monitor radio resource allocation status information allocated to the first DU 10.

In the present disclosure, the radio resource allocation status information may refer to status information about radio resources allocated to the first DU 10 in relation to the amount of data currently being processed by the first DU 10. For example, the radio resource allocation status information may include information about whether a change in radio resource allocation information currently allocated to the first DU 10 and the second DU 20 is required, information about whether the amount of resources allocated to the first DU 10 or the second DU 20 needs to be decreased or increased, information about a change in resources to be allocated to the first DU 10 in relation to a change in the amount of data being currently processed or required to be processed (e.g., a resource change rate or amount), and the like. During scale-out, when a change in the amount of data to be processed by each of the first DU 10 and the second DU 20 occurs, the first DU 10 may determine, based on the radio resource allocation status information, that changed radio resource allocation information is required.

In operation S320, the first DU 10 may determine changed radio resource allocation information based on the radio resource allocation status information.

In an embodiment, the changed radio resource allocation information may include bitmap information indicating at least one second DU resource 910 allocated to the second DU 20, and at least one first DU resource 920 allocated to the first DU 10.

In an embodiment, the changed radio resource allocation information may include information about one or more resource regions allocated to the first DU 10 or the second DU 20. The information about the one or more resource regions may include information about the number of one or more resource regions 1031, 1032, 1033, 1034, 1035, and 1036, and position information about points constituting the one or more resource regions.

In an embodiment, the changed radio resource allocation information may include a reference value 1110 corresponding to an integer value that separates resources allocated to the first DU 10 and resources allocated to the second DU 20.

In operation S330, the first DU 10 may identify synchronization time information for applying the changed radio resource allocation information.

In an embodiment, the synchronization time information may correspond to preset time information. The preset time information may include at least one of preset frame information or slot information for synchronization.

In an embodiment, the synchronization time information may be identified based on information about a time when a packet internet groper (PING) message is transmitted from the first DU 10 to the second DU 20, and information about a time when a response message to the PING message is transmitted from the second DU 20 to the first DU 10.

In an embodiment, the first DU 10 may transmit, to the second DU 20, a request message including information about a current time resource processed by the first DU 10. The first DU 10 may receive the synchronization time information from the second DU 20 based on the request message. The synchronization time information may be identified based on the information about the current time resource processed by the first DU 10, and information about a current time resource processed by the second DU 20.

In operation S340, the first DU 10 may transmit, to the second DU 20, a message for synchronization including the synchronization time information and the changed radio resource allocation information.

In an embodiment, the message for synchronization may further include common signal indication information. The common signal indication information may be information indicating whether the first DU 10 is to process a common signal.

In an embodiment, the synchronization time information may include at least one of frame information or slot information for applying the changed radio resource allocation information.

In operation S350, the first DU 10 may perform transmission or reception of a message with the RU 30 connected to the first DU 10 and the second DU 20, based on the message for synchronization.

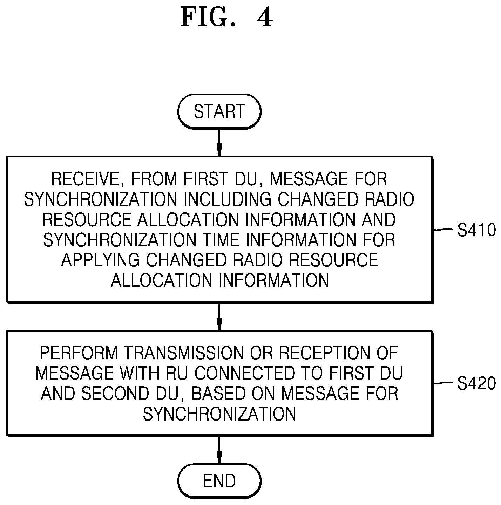

FIG. 4 is a flowchart of a method of operating the second DU 20, according to an embodiment.

In operation S410, the second DU 20 may receive, from the first DU 10, a message for synchronization including changed radio resource allocation information and synchronization time information for applying the changed radio resource allocation information.

In an embodiment, the synchronization time information for applying the changed radio resource allocation information may be identified based on radio resource allocation status information allocated to the first DU. The synchronization time information may include at least one of frame information or slot information for applying the changed radio resource allocation information.

In an embodiment, the message for synchronization may further include common signal indication information. The common signal indication information may be information indicating whether the first DU 10 is to process a common signal.

In an embodiment, the changed radio resource allocation information may include bitmap information indicating at least one second DU resource 910 allocated to the second DU 20, and at least one first DU resource 920 allocated to the first DU 10.

In an embodiment, the changed radio resource allocation information may include information about one or more resource regions allocated to the first DU 10 or the second DU 20. The information about the one or more resource regions may include information about the number of one or more resource regions 1031, 1032, 1033, 1034, 1035, and 1036, and position information about points constituting the one or more resource regions.

In an embodiment, the changed radio resource allocation information may include a reference value 1110 corresponding to an integer value that separates resources allocated to the first DU 10 and resources allocated to the second DU 20.

In an embodiment, the synchronization time information may correspond to preset time information. The preset time information may include at least one of preset frame information or slot information for synchronization.

In an embodiment, the synchronization time information may be identified based on information about a time when a PING message is transmitted from the first DU 10 to the second DU 20, and information about a time when a response message to the PING message is transmitted from the second DU 20 to the first DU 10.

In an embodiment, the second DU 20 may identify synchronization time information for applying the changed radio resource allocation information. The second DU 20 may receive, from the first DU 10, a request message including information about a current time resource processed by the first DU 10. The second DU 20 may identify the synchronization time information based on the information about the current time resource processed by the first DU 10, and information about a current time resource processed by the second DU 20. The second DU 20 may transmit the synchronization time information to the first DU 10 based on the request message.

In operation S420, the second DU 20 may perform transmission or reception of a message with the RU 30 connected to the first DU 10 and the second DU 20, based on the message for synchronization.

FIG. 5 is a diagram illustrating a flowchart of message transmission/reception of a first DU, according to an embodiment.

The first DU may include a first scale agent module 510, a first context synchronizer module 520, a first schedule coordinator module 530, a first MAC scheduler module 540, a first fronthaul flow manager module 550, and a first fronthaul handler module 560.

In the present disclosure, the first scale agent module 510 may refer to a module that coordinates operations required during scale-out and scale-in operations of the first DU 10. The first scale agent module 510 may refer to a main module for scale operations.

In the present disclosure, the first context synchronizer module 520 may refer to a module that checks the amount of data to be processed by the first DU 10 and performs reporting to the first scale agent module 520. For example, the first context synchronizer module 520 may refer to a module that identifies and manages the amount of data (e.g., the number of UEs) to be processed by the first DU 10. The first context synchronizer module 520 may refer to a module that identifies which of the first DU 10 or the second DU 20 needs to process data generated from UEs.

In the present disclosure, the first schedule coordinator module 530 may refer to a module for performing scheduling. The first schedule coordinator module 530 may include a module that determines and schedules radio resources allocated to the first DU 10. The first schedule coordinator module 530 may perform a role of changing radio resource allocation information such that the changed radio allocation information may be applied through the first MAC scheduler 540. The first schedule coordinator module 530 may include a module that determines radio resource allocation information and synchronization time information and generates a message for synchronization.

In the present disclosure, the first MAC scheduler module 540 may include a module for managing radio resources allocated to the first DU 10. The first MAC scheduler module 540 may perform the same function as the MAC scheduler module of FIG. 2 described above. The first MAC scheduler module 540 may manage a schedule for using a common signal for UEs corresponding to the first DU 10 and radio resources allocated for each UE.

In the present disclosure, the first fronthaul flow manager module 550 may refer to a module that determines and controls the extent to which the first DU 10 is responsible for transmitting and receiving packets.

In the present disclosure, the first fronthaul handler module 560 may include a module capable of transmitting and receiving data to and from the RU 30 based on information about resources allocated to the first DU 10.

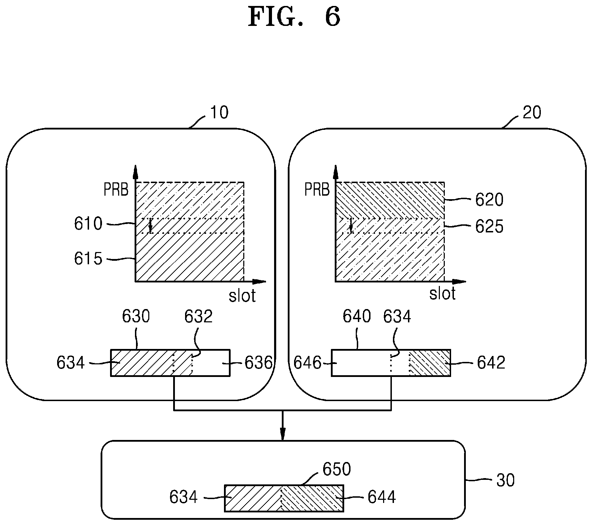

The operation of each module will be described by using the case of FIG. 6 below.

FIG. 6 is a diagram for describing a method, performed by a first DU and a second DU, of operating based on changed radio resource allocation information and synchronization time information, according to an embodiment.

For convenience of description, the operations of the first DU 10 and the second DU 20 will be described with reference to a case in which a scale-out operation is being performed and the number of UEs connected to a particular RU 30 within the first DU 10 has decreased from 700 to 500. The above-described case is for convenience of description and the present disclosure is not limited thereto. In addition, although operations below is described as operations of the respective modules, the operation of each module may be performed by the first DU 10 or the second DU 20 including the module.

In operation S571, the first context synchronizer module 520 may report, to the first scale agent module 510, the amount of data currently being processed. For example, the first context synchronizer module 520 may report the amount of data currently being processed (e.g., the number of UEs being managed by the first DU 10), to the first scale agent module 510 at a preset interval. For example, each time the amount of data processed by each of the first DU 10 and the second DU 20 is changed (e.g., when UEs that were processed by the first DU 10 are migrated to the second DU 20 to be processed), the first context synchronizer module 520 may report, to the first scale agent module 510, the amount of data currently being processed (e.g., the number of UEs being managed by the first DU 10).

For example, referring to FIG. 6, as the first DU 10 was managing 700 UEs among UEs of the RU 30, but 200 UEs among the 700 UEs are migrated to the second DU 20, and the first scale agent module 510 may detect that the first DU 10 is currently managing only 500 UEs among UEs of the RU 30. The first context synchronizer module 520 may report, to the first scale agent module 510, the number of currently managed UEs, i.e., 500, as the amount of data currently being processed.

In operation S572, the first scale agent module 510 may identify, based on the amount of data being processed, whether changed radio resource allocation information is required. For example, the first scale agent module 510 may identify, based on a predetermined reference data processing amount, whether resource allocation information about resources currently allocated to the first DU 10 needs to be changed. The predetermined reference data processing amount is a reference value for determining whether the resource allocation information about resources allocated to the first DU 10 needs to be changed, and as a non-limiting example, may be set as a number of UEs.

For example, referring to FIG. 6, because the number of terminals to be processed by the first scale agent module 510 has decreased from 700 to 500, the first scale agent module 510 may identify that the first DU 10 may operate with a reduced amount of resources, decreasing from the amount corresponding to a 1-1st current resource region 610 (e.g., 70 % of the entire radio resources) to the amount corresponding to a 1-1st changed resource region 615 (e.g., 50 % of the entire radio resources), and may identify that allocation information about allocated resources needs to be changed.

In operation S573, the first scale agent module 510 may transmit the radio resource allocation status information to the first schedule coordinator module 530 to request a change in the radio resource allocation information. Based on determining that a required data processing amount has decreased, the first scale agent module 510 may transmit the radio resource allocation status information to the first schedule coordinator module 530 to notify that a smaller resource region than the current allocation status may be allocated.

For example, referring to FIG. 6, the first scale agent module 510 may transmit the radio resource allocation status information to the first schedule coordinator module 530, along with information that resources may be allocated by changing to the 1-1st changed resource region 615 (e.g., 50 % of the entire radio resources). In addition, the second DU 20 was managing 300 UEs, but 200 UEs have been migrated to the second DU 20. Thus, the second DU 20 may be allocated an amount of resources that has increased from a 2-1st current resource region 620 (e.g., 30 % of the entire radio resources) to a 2-2nd changed resource region 625 (e.g., 50 % of the entire radio resources).

In operation S574, the first schedule coordinator module 530 may request scheduling information from the first MAC scheduler module 540. For example, the scheduling information may include information about a frame and a slot that are currently being processed by the first MAC scheduler module 540.

In operation S575, the first schedule coordinator module 530 may receive the scheduling information from the first MAC scheduler module 540. For example, the first schedule coordinator module 530 may obtain information about a frame and a slot with which data currently being processed by the first MAC scheduler module 540 is transmitted or received.

For example, the first schedule coordinator module 530 may obtain (83, 5) (i.e., slot 5 of frame 83) as current time information (e.g., (frame, slot)) being processed by the first MAC scheduler module 540.

In operation S576, the first schedule coordinator module 530 may generate a message for synchronization.

In an embodiment, the first schedule coordinator module 530 may determine changed radio resource allocation information based on the radio resource allocation status information. The changed radio resource allocation information will be described in detail below with reference to the following drawings.

In an embodiment, the first schedule coordinator module 530 may determine synchronization time information for applying the changed radio resource allocation information. For example, the first schedule coordinator module 530 may determine the synchronization time information for applying the changed radio resource allocation information, based on the scheduling information received from the first MAC scheduler module 540. A method of determining the synchronization time information will be described in detail below with reference to the following drawings.

Referring to FIG. 6, because the first MAC scheduler module 540 is currently processing data of (83, 5) (i.e., slot 5 of frame 83), synchronization time information for the second DU 20 and the first DU 10 to apply the changed radio resource allocation information at the same time may be determined as (86, 7) (i.e., slot 7 of frame 86), considering the time when a message for synchronization is transmitted to the second DU 20, the time when the synchronization time information and the changed radio resource allocation information are transmitted and set in the second DU 20, a data delay due to a network environment, and the like.

In an embodiment, the first schedule coordinator module 530 may generate a message for synchronization including the synchronization time information and the changed radio resource allocation information. The message for synchronization will be described in detail below with reference to [Table 1] below.

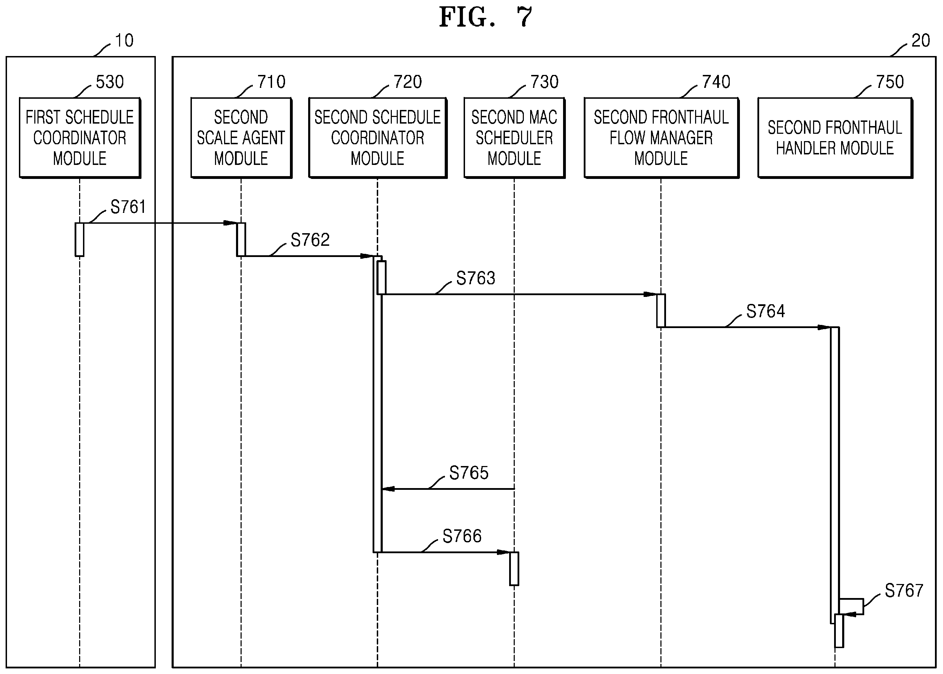

In operation S577, the first schedule coordinator module 530 may transmit the message for synchronization to the second DU 20. For example, the first schedule coordinator module 530 may transmit the message for synchronization to a second scale agent module 710 of the second DU 20. To prevent resources overlapping with resources allocated to the first DU 10 from being used by the second DU 20 and to transmit and receive data by applying the changed radio resource allocation information at the same time with the first DU 10, the second scale agent module 710 may transmit the received message for synchronization to each module in the second DU 20. The operation of each module of the second DU 20 will be described below with reference to FIG. 7.

In operation S578, the first schedule coordinator module 530 may transmit the message for synchronization to the first fronthaul flow manager module 550.

In operation S579, the first fronthaul flow manager module 550 may transmit the message for synchronization to the first fronthaul handler module 560. The first fronthaul handler module 560 may transmit a packet for data to the RU 30 or receive a packet from the RU 30 by applying the changed radio resource allocation information at the same time with the second DU 20, without using, by the first DU 10, resources overlapping with resources allocated to the second DU 20.

For example, the first schedule coordinator module 530 may determine changed radio resource allocation information and synchronization time information for applying the changed radio resource allocation information. The first schedule coordinator module 530 may generate a message for synchronization including the changed radio resource allocation information (e.g., resource allocation information indicating that the first DU 10 may use the 1-1st changed resource region 615 and the second DU 20 may use the 2-2nd changed resource region 625) and the synchronization time information (e.g., (86, 7) (i.e., slot 7 of frame 86)).

Referring to FIG. 6, the first schedule coordinator module 530 may transmit the message for synchronization to the first fronthaul handler module 560 and a second schedule coordinator module 620 of the second DU 20. For packet transmission and reception, the first fronthaul handler module 560 may set the changed radio resource allocation information and the synchronization time information for applying the changed radio resource allocation information. The second schedule coordinator module 620 may transmit the message for synchronization to the second fronthaul handler module 650, to set the changed radio resource allocation information and the synchronization time information for applying the changed radio resource allocation information, for packet transmission and reception.

In operation S580, the first MAC scheduler module 540 may transmit, to the first schedule coordinator module 530, time information (e.g., frame information and slot information) about data currently being processed by the first MAC scheduler module 540. The first MAC scheduler module 540 may change and transmit the time information (e.g., frame information and slot information) about the data being processed by the first MAC scheduler module 540, until the synchronization time information coincides with the time information about the data being processed.

In operation S581, based on the synchronization time information coinciding with time information about data to be currently processed, the first schedule coordinator module 530 may request scheduling from the first MAC scheduler module 540 such that the scheduling is performed based on the changed radio resource allocation information. For example, based on the synchronization time information coinciding with the time information about the data to be currently processed, the first schedule coordinator module 530 may process scheduling based on the changed radio resource allocation information.

In operation S582, based on the synchronization time information coinciding with the time information about the data to be currently processed, the first fronthaul flow handler module 560 may transmit a message to the RU 30 or receive a message from the RU 30 based on the changed radio resource allocation information.

Referring to FIG. 6, the first fronthaul flow handler module 560 may transmit a message to the RU 30 or receive a message from the RU 30 by using the radio resource allocation information before the change, until the current time coincides with the synchronization time information (e.g., slot 7 of frame 86).

For example, the first fronthaul flow handler module 560 may generate a packet 630 by using the radio resource allocation information before the change. The first fronthaul flow handler module 560 may process, as valid data 632, only a packet corresponding to the radio resource allocation information before the change, and transmit a message to the RU 30 or receive a message from the RU 30.

For example, when the current time coincides with the synchronization time information (e.g., slot 7 of frame 86), the first fronthaul flow handler module 560 may process, as valid data 634, only a packet corresponding to the changed radio resource allocation information and transmit the generated packet to the RU 30. For example, a region 636 other than the valid data may include a value of 0.

The order of the above-described operations may be changed, or some operations may be omitted. For example, the order of operations S577 and S578 may be changed or may be performed at the same time. For example, the order of operations S581 and S582 may be changed or may be performed at the same time.

The operations of the modules included in the second DU 20 will be described in detail below with reference to the following drawings. Descriptions that are already provided above may be omitted.

FIG. 7 is a diagram illustrating a flowchart of message transmission/reception of a second DU, according to an embodiment.

The second DU 20 may include the second scale agent module 710, the second schedule coordinator module 720, a second MAC scheduler module 730, a second fronthaul flow manager module 740, and the second fronthaul handler module 750.

In the present disclosure, the second scale agent module 710 may include a module that coordinates operations required during scale-out and scale-in operations of the second DU 20. The second scale agent module 710 may include a main module for scale operations.

In the present disclosure, the second schedule coordinator module 720 may include a module for performing scheduling. The second schedule coordinator module 720 may include a module that determines radio resources to be allocated to the second DU 20 during scheduling. The second schedule coordinator module 720 may perform a role of changing radio resource allocation information such that the changed radio allocation information may be applied through the second MAC scheduler 730.

In the present disclosure, the second MAC scheduler module 730 may include a module for managing radio resources allocated to the second DU 20. The second MAC scheduler module 730 may manage a schedule for using a common signal for UEs corresponding to the second DU 20 and radio resources allocated for each UE.

In the present disclosure, the second fronthaul flow manager module 740 may include a module that determines and controls the extent to which the second DU 20 is responsible for transmitting and receiving packets.

In the present disclosure, the second fronthaul handler module 750 may include a module capable of transmitting and receiving data to and from an RU based on information about resources allocated to the second DU 20.

In operation S761, the second scale agent module 710 may receive a message for synchronization from the first schedule coordinator module 530.

In operation S762, the second scale agent module 710 may transmit the message for synchronization to the second schedule coordinator module 720, and the second schedule coordinator module 720 may set synchronization time information and changed radio resource allocation information.

In operation S763, the second schedule coordinator module 720 may transmit the message for synchronization to the second fronthaul manager module 740.

In operation S764, the second fronthaul manager module 740 may transmit the message for synchronization to the second fronthaul handler module 750, and the second fronthaul handler module 750 may set synchronization time information and changed radio resource allocation information.

In operation S765, the second MAC scheduler module 730 may transmit, to the second schedule coordinator module 720, time information (e.g., frame information and slot information) about data currently being processed by the second MAC scheduler module 730. The second MAC scheduler module 730 may change and transmit the time information (e.g., frame information and slot information) about the data being processed by the second MAC scheduler module 730, until the synchronization time information coincides with the time information about the data being processed.

In operation S766, based on the synchronization time information coinciding with time information about data to be currently processed, the second schedule coordinator module 720 may request scheduling from the second MAC scheduler module 730 such that the scheduling is performed based on the changed radio resource allocation information. For example, based on the synchronization time information coinciding with the time information about the data to be currently processed, the second schedule coordinator module 720 may process scheduling based on the changed radio resource allocation information.

In operation S767, based on the synchronization time information coinciding with the time information about the data to be currently processed, the second fronthaul handler module 750 may transmit a message to the RU 30 or receive a message from the RU 30 based on the changed radio resource allocation information.

Referring to FIG. 6, the second fronthaul handler module 750 may transmit a message to the RU 30 or receive a message from the RU 30 by using the radio resource allocation information before the change, until the current time coincides with the synchronization time information (e.g., slot 7 of frame 86).

For example, the second fronthaul handler module 750 may generate a packet 640 by using the radio resource allocation information before the change. The second fronthaul handler module 750 may process, as valid data 642, only a packet corresponding to the radio resource allocation information before the change by using the radio resource allocation information before the change, and may transmit a message to the RU 30 or receive a message from the RU 30.

For example, when the current time coincides with the synchronization time information (e.g., slot 7 of frame 86), the second fronthaul handler module 750 may process, as valid data 644, only a packet corresponding to the changed radio resource allocation information and transmit the generated packet to the RU 30. For example, a region 646 other than the valid data may include a value of 0.

The order of the above-described operations may be changed, or some operations may be omitted. For example, the order of operations S766 and S767 may be changed or may be performed at the same time.

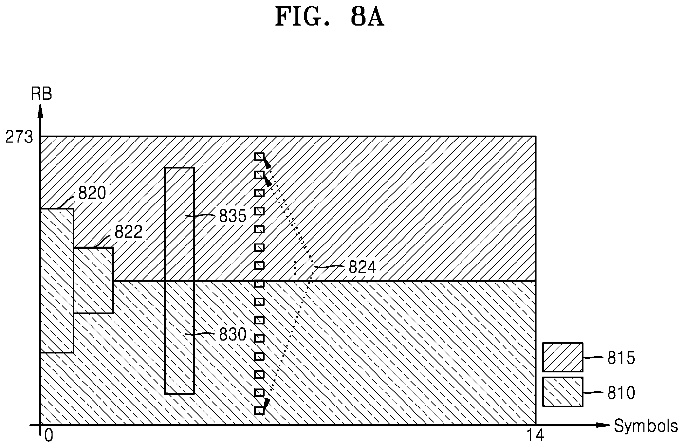

FIG. 8A is a diagram for describing downlink radio resources according to an embodiment.

In an embodiment, downlink data may refer to data transmitted from the first DU 10 and the second DU 20 to the RU 30. Physical channels for transmitting downlink data may include a physical downlink control channel (PDCCH), a physical downlink shared channel (PDSCH), and a physical broadcast channel (PBCH). For example, the PDCCH may refer to a channel for transmitting control information (e.g., downlink control information (DCI)), but is not limited thereto. The PDSCH may refer to a channel for transmitting user data, but is not limited thereto. The PBCH refers to a channel for transmitting messages to be broadcast, and may refer to, for example, a channel for transmitting cell system information, but is not limited thereto.

In an embodiment, resource regions may include a first downlink resource region 810, which is a resource region allocated to the first DU 10, and a second downlink resource region 815, which is a resource region allocated to the second DU 20. The first downlink resource region 810 may refer to a resource region allocated for the first DU 10 to transmit data to the RU 30 through the PDSCH, and the second downlink resource region 815 may refer to a resource region allocated for the second DU 20 to transmit data to the RU 30 through the PDSCH.

In the present disclosure, downlink data (or signals) may be classified into common signals and UE-specific signals. The common signals may include control resource set (CORESET) #0 820, a synchronization signal block (SSB) 822, a channel state information reference signal (CSI-RS) 824, and the like, but are not limited thereto.

In an embodiment, resource regions in which a CORESET (e.g., CORESET #1, CORESET #2, or CORESET #3), which is a UE-specific signal, not a common signal, is transmitted may be allocated separately to each of the first DU 10 or the second DU 20. For example, data corresponding to a resource region 830 among the data of the CORESET may be transmitted by the first DU 10 using the resource region 830, and data corresponding to a resource region 835 among the data of the CORESET may be transmitted by the second DU 20 using the resource region 835.

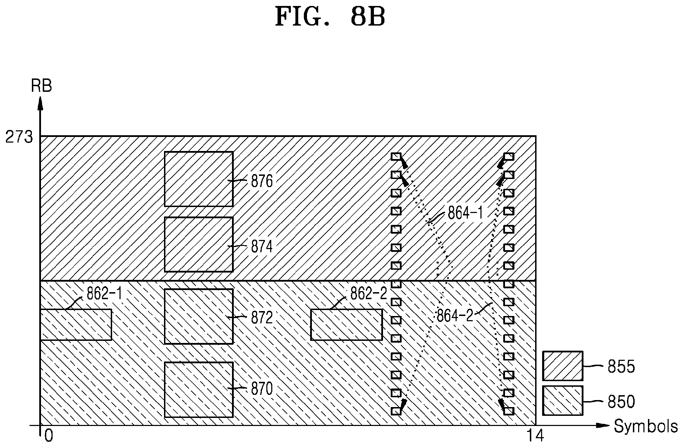

FIG. 8B is a diagram for describing uplink radio resources according to an embodiment.

In an embodiment, uplink data may refer to data transmitted from the first RU 30 to the first DU 10 and the second DU 20. Physical channels for transmitting uplink data may include a physical random-access channel (PRACH), a physical uplink control channel (PUCCH), and a physical uplink shared channel (PUSCH). For example, the PUCCH may refer to a channel for transmitting control information, but is not limited thereto. The PUSCH may refer to a channel for transmitting user data, but is not limited thereto. The PRACH may refer to a channel for transmitting messages for performing random access, but is not limited thereto.

In an embodiment, resource regions may include a first uplink resource region 850, which is a resource region allocated to the first DU 10, and a second uplink resource region 855, which is a resource region allocated to the second DU 20. The first uplink resource region 850 may refer to a resource region allocated for the first DU 10 to receive data from the RU 30 through the PUSCH, and the second uplink resource region 815 may refer to a resource region allocated for the second DU 20 to receive data from the RU 30 through the PUSCH.

In the present disclosure, uplink data (or signals) may be classified into common signals and UE-specific signals. The common signals may include PRACHs 862-1 and 862-2, sounding reference signals (SRSs) 864-1 and 864-2, but are not limited thereto.

In an embodiment, resource regions for transmitting PUCCHs, which are UE-specific signals, not common signals, may be allocated to different DUs. For example, PUCCH resource #0 870 may be allocated to the first DU 10, PUCCH resource #1 872 may be allocated to the first DU 10, PUCCH resource #2 874 may be allocated to the second DU 20, and PUCCH resource #3 876 may be allocated to the second DU 20.

In the present disclosure, information may include first information (SSBs, CSI-RSs, PRACHs, and common PDCCHs) and second information (UE-specific PDCCHs, PDSCHs, and PUSCHs). Common signals may refer to the first information.

In an embodiment, common signals may be transmitted or received by any one of the first DU 10 or the second DU 20, and a resource region for transmitting or receiving common signals may be allocated to any one of the first DU 10 or the second DU 20. For common signals, each of the first DU 10 and the second DU 20 may generate a resource map for transmitting common signals based on preset or provided information. Thus, when the first DU 10 and the second DU 20 are notified of which DU is to transmit or receive common signals, the designated DU, either the first DU 10 or the second DU 20, may transmit or receive common signals in the resource region for transmitting or receiving common signals, without additional information. In the present disclosure, common signal indication information to be described below may refer to information indicating which of the first DU 10 and the second DU 20 is to transmit or receive common signals.

In an embodiment, for signals other than common signals, resources may be allocated to each DU by using changed radio resource allocation information and synchronization time information, and a time at which each DU needs to operate may be set based on the allocated resources.

Hereinafter, a message for synchronization that may include at least one of synchronization time information, common signal indication information, or changed radio resource allocation information will be described in more detail. In an embodiment, the first DU 10 may transmit a message for synchronization (NEWRBMap in [Table 1]) to the second DU 20.

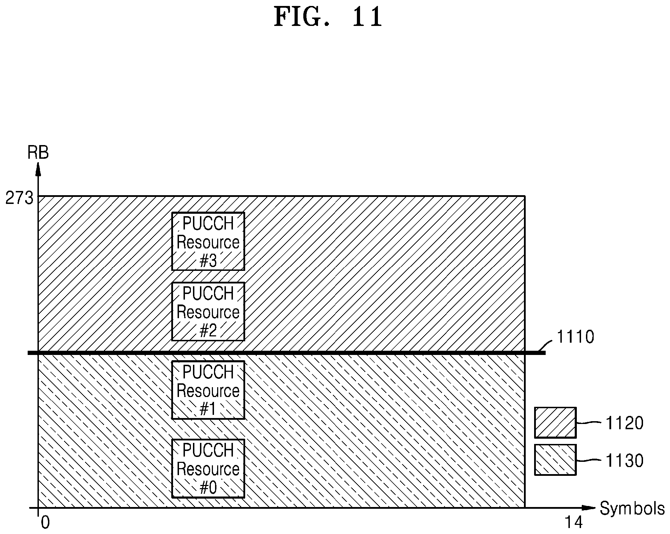

In an embodiment, the message for synchronization may include synchronization time information. The synchronization time information may be expressed as an integer type and may include at least one of frame information or slot information for applying changed radio resource allocation information. For example, referring to [Table 1], the synchronization time information (e.g., the variable 'time' in [Table 1]) may include two integer values (i.e., frame information and slot information). A method of setting synchronization time information will be described in detail below with reference to FIGS. 11 to 13.

In an embodiment, the message may include common signal indication information. The common signal indication information may refer to information indicating whether the first DU 10 is to process a common signal. For example, referring to [Table 1], when the value of common_signal indicating common signal indication information is True, it may indicate that the first DU 10 is to process a common signal, and when the value of common_signal is False, it may indicate that the second DU 20 is to process a common signal.

In an embodiment, the message may include changed radio resource allocation information. For example, new_ue_air_resource[2], which represents changed radio resource allocation information, may be expressed by using the data structures of [Table 2] to [Table 4]. struct UERBMap new_ue_air_resource[2] contains two pieces of information, and thus may include uplink resource allocation information and downlink resource allocation information.

**[Table 1]**

| |
|---|
| ```
     struct NEWRBMap {
     int type time[2], // frame, slot
     bool type common_signal, // true or false
     struct UERBMap new_ue_air_resource[2] // Uplink, Downlink
     }
``` |

A method of setting changed radio resource allocation information (e.g., UERBMap in [Table 1]) will be described in more detail below with reference to FIGS. 9 to 11. For example, methods of setting changed radio resource allocation information include a method using a bitmap, a method using a two-dimensional area range, and a method using a threshold for dividing a resource region into upper and lower parts, which will be described below with reference to the following drawings.

FIG. 9 is a diagram illustrating a structure of bitmap-type changed radio resource allocation information, according to an embodiment.

In an embodiment, changed radio resource allocation information may include at least one second DU resource 910 allocated to the second DU 20, and at least one first DU resource 920 allocated to the first DU 10.

In an embodiment, the first DU 10 may indicate, for each resource, whether the resource is allocated to the first DU 10 or allocated to the second DU 10. For example, a resource may correspond to a resource element (RE) or a resource block (RB).

A resource region may be composed of 14 symbols and 273 REs, but the number of symbols and the number of REs are not limited thereto. The first DU 10 may generate changed radio resource allocation information in the form of a 14 x 273 bitmap. For example, for a resource region in which 14 symbols and 273 REs exist, the changed radio resource allocation information may include information indicating whether each RE is allocated to the first DU 10 or the second DU 10. For example, when a bit of the bitmap is 0, it may indicate a resource allocated to the first DU 10, and when a bit of the bitmap is 1, it may indicate a resource allocated to the second DU 20. In addition, as another example, when a bit of the bitmap is 0, it may indicate a resource allocated to the second DU 20, and when a bit of the bitmap is 1, it may indicate a resource allocated to the first DU 10.

The 14 symbols represent one slot format, and a pattern may be repeated every 14 symbols. In a resource grid, one symbol may have up to 273 REs. In addition, one symbol may have up to 273 RBs depending on the bandwidth and a subcarrier spacing (SCS) value. Thus, in bitmap-type changed radio resource allocation information (e.g., UERBMap in [Table 2]), each bit may include information indicating whether the corresponding resource, either an RB or an RE, is allocated to the first DU 10 or the second DU 10.

**[Table 2]**

| |
|---|
| ```
     Struct UERBMap {
     int_16 map[273] }
``` |

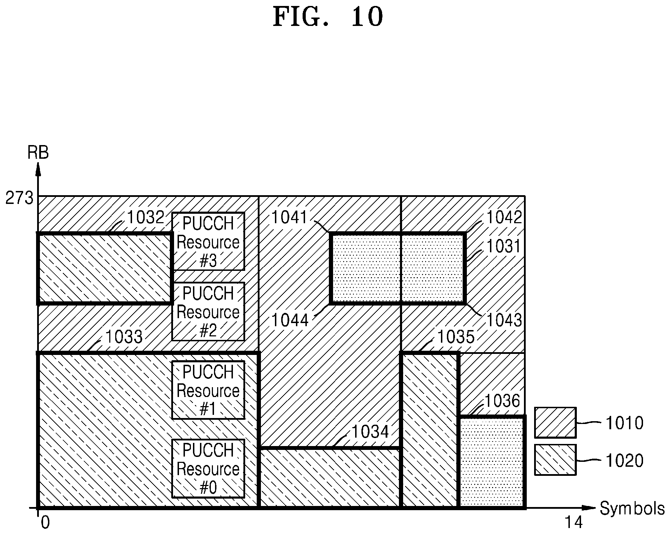

Bitmap-type radio resource allocation information may provide an effect of flexible allocation of resources to the first DU 10 and the second DU 20. Furthermore, the bitmap-type radio resource allocation information allows for allocation of small units of resources to the first DU 10 and the second DU 20, enabling efficient use of radio resources. FIG. 10 is a diagram illustrating a structure of changed radio resource allocation information including information about allocated resource regions, according to an embodiment.

In an embodiment, changed radio resource allocation information may include information about one or more resource regions. Referring to FIG. 10, radio resources may include a second DU region 1010 allocated to the second DU 20, and a first DU region 1020 allocated to the first DU 10. For example, the second DU region 1010 and the first DU region 1020 may be configured in units of physical resource blocks (PRBs), RBs, or REs.

In an embodiment, the first DU region 1020 may include a 1-1st DU region 1031, a 1-2nd DU region 1032, a 1-3rd DU region 1033, a 1-4th DU region 1034, a 1-5th DU region 1035, and a 1-6th DU region 1036.

In an embodiment, the 1-1st DU region 1031 may correspond to a quadrangular region formed by a first point 1041, a second point 1042, a third point 1043, and a fourth point 1041. However, definition of the 1-1st DU region 1031 does not require four points, and the above-described four values are only an embodiment.

In an embodiment, the first DU 10 may generate radio resource allocation information including the information about the resource region described above by using a PRB MAP pointer.

[Table 3] below is for describing a structure of radio resource allocation information in which a PRB MAP pointer is used.

Referring to [Table 3], NumberofArea may indicate the number of at least one or more resource regions to be identified. That is, in the example of FIG. 10, the value of NumberofArea may be 6.

In PRB[x], the value of x may represent the number of points to be used to define a resource region. That is, in the example of FIG. 10, PRB[4] may indicate that resource information about the first point 1041, resource information about the second point 1042, resource information about the third point 1043, and resource information about the fourth point 1041 are to be included. For example, the first point 1041 may represent (first PRB, first symbol), the second point 1042 may represent (first PRB, second symbol), the third point 1043 may represent (second PRB, second symbol), and the fourth point 1044 may represent (second PRB, first symbol). For example, the first symbol may refer to the first symbol constituting the resource region, and the second symbol may refer to the last symbol.

**[Table 3]**

| |
|---|
| ```
     Struct UERBMap {
     int PRB[4][NumberofArea]
     }
``` |

For example, FIG. 10 illustrates an example in which information about the resource region allocated to the first DU 10 is indicated, but it is also possible to indicate information about the resource region allocated to the second DU 20. The changed radio resource allocation information including the information about the allocated resource regions has an effect that the resource regions may be allocated to the first DU 10 and the second DU 20 for each two-dimensional region. The changed radio resource allocation information including the information about the allocated resource regions has an effect that the resources may be allocated with a smaller size of data compared to the bitmap format of FIG. 10. In addition, there is an effect that less complicated resource allocation is possible compared to the bitmap format of FIG. 10.

FIG. 11 is a diagram illustrating a structure of changed radio resource allocation information including a reference value, according to an embodiment.

In an embodiment, the first DU 10 may generate radio resource allocation information by using the reference value 1110. The first DU 10 may include, in a message, the reference value 1110 corresponding to a particular value.

[Table 4] below is for describing a structure of radio resource allocation information in which the reference value 1110 is used, and 'reference', meaning the reference value, has an integer type.

In an embodiment, the reference value 1110 in the message may correspond to an integer corresponding to any one of the numbers from 0 to 273. Here, 0 to 273 may represent index values of REs.

**[Table 4]**

| |
|---|
| ```
     Struct UERBMap {
     int reference
     }
``` |

Referring to FIG. 11, a resource region located below the reference value 1110 may be set as a first DU region 1130. A resource region located above the reference value 1110 may be set as a second DU region 1130.In an embodiment, based on the reference value 1110, the first DU 10 may use at least one RB having an index value corresponding to a value less than the reference value 1110. That is, the first DU region 1130 allocated to the first DU 10 may be a resource region located below the reference value 1110. In an embodiment, based on the reference value 1110, the second DU 20 may use at least one RB having an index value corresponding to a value greater than or equal to the reference value 1110. That is, the second DU region 1120 allocated to the second DU 20 may be a resource region located above the reference value 1110.

In an embodiment, a resource region located above the reference value 1110 may be set as the first DU region 1130, and a resource region located below the reference value 1110 may be set as the second DU region 1130.

The structure of the radio resource allocation information using the reference value 1110 has an advantage that the size of data to be shared between the first DU 10 and the second DU 20 is simple.

In addition, the structure of the radio resource allocation information using the reference value 1110 has an advantage that a cost for generating resource mapping information is low.

The structure of the radio resource allocation information using the reference value 1110 has an advantage that it may be used when indicating information about radio resources simply allocated between the first DU 10 and the second DU 20.

Hereinafter, a method, performed by the first DU 10, of determining synchronization time information for applying changed radio resource allocation information will be described.

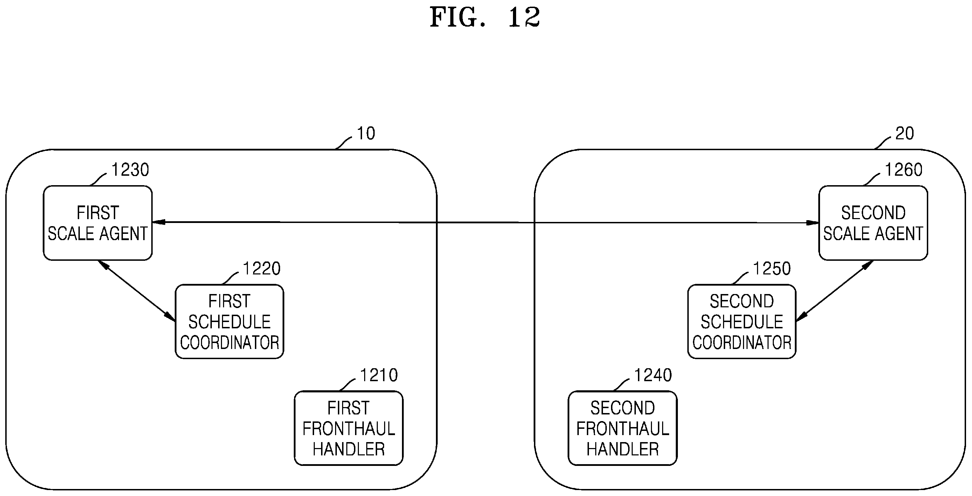

FIG. 12 is a diagram for describing synchronization time information including preset time information, according to an embodiment.

The first DU 10 may determine synchronization time information, considering a time taken for a first schedule coordinator 1220 to transmit a message to a second schedule coordinator 1250 of the second DU 20. Within the first DU 10, a time required for changed radio resource allocation information to be transmitted to a first fronthaul handler 1210 may be less than a time required for the first DU 10 to transmit the changed radio resource allocation information to the second schedule coordinator 1250. This is because the transmission of the changed radio resource allocation information to the first fronthaul handler 1210 is an operation that occurs in the same environment in the first DU 10, but the transmission of the changed radio resource allocation information to the second schedule coordinator 1250 is an operation that occurs in different environments.

In an embodiment, in the first DU 10, the synchronization time information may include preset time information. The preset time information may be a fixed time value. During system configuration, a communication time required for transmitting and receiving messages between the first DU 10 and the second DU 20 may be measured, and the measured communication time may be used as the preset time information. For example, the preset time information may include at least one of frame information or slot information.

In an embodiment, when the first DU 10 (e.g., a first server) and the second DU 20 (e.g., a second server) are installed, the preset time information may be a value determined based on a time when a message is transmitted from the first schedule coordinator 1220 to a first scale agent 1230, a time when a message is transmitted from the first scale agent 1230 to a second scale agent 1260, and a time when a message is transmitted from the second scale agent 1260 to the second schedule coordinator 1250.

In an embodiment, the first DU 10 may determine synchronization time information for applying the changed radio resource allocation information, by adding the preset time information to a time point when a radio resource change-requiring event occurs. Synchronization time information = Time point when radio resource change-requiring event occurs + Preset time information

In an embodiment, the synchronization time information may refer to a time for applying the changed radio resource allocation information, and may represent time resource information. As a non-limiting example, the synchronization time information may include at least one of frame information or slot information for applying the changed radio resource allocation information.

In an embodiment, the time point when the radio resource change-requiring event occurs may be a time point when the first DU 10 determines that a change in the changed radio resource allocation information is required. For example, the time point when the radio resource change-requiring event occurs may be a time point when the first DU 10 starts or completes generation of the changed radio resource allocation information. As a non-limiting example, the time point when the radio resource change-requiring event occurs may include at least one of frame information or slot information about the time point when the radio resource change-requiring event occurs.

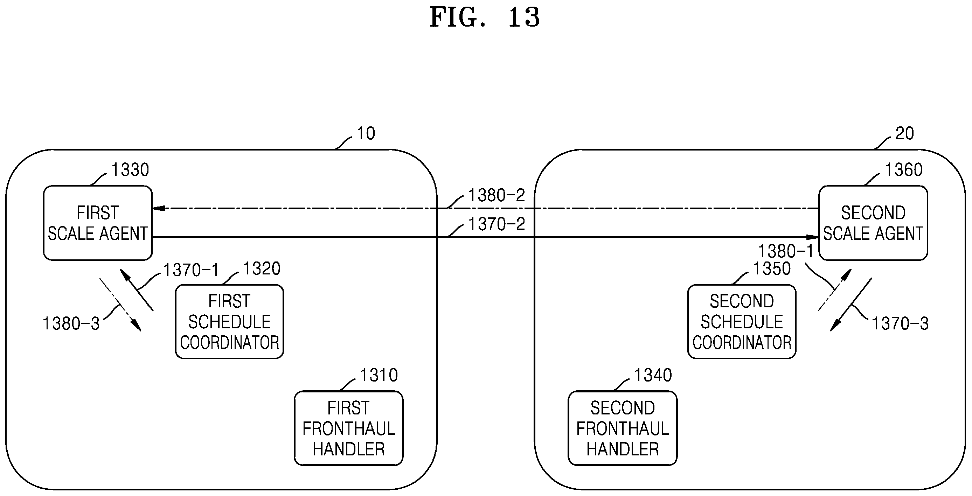

FIG. 13 is a diagram for describing dynamically identified synchronization time information according to an embodiment.

A PING message may refer to a message to transmit an Internet Control Message Protocol (ICMP) echo request to another device, which returns a response message when the PING message is received. A fast response time may indicate a low latency in the network environment through which the PING message has been transmitted.

In an embodiment, the synchronization time information may be identified based on information about a time when a PING message is transmitted from the first DU 10 to the second DU 20, and information about a time when a response message to the PING message is transmitted from the second DU 20 to the first DU 10.

In an embodiment, the information about the time when the PING message is transmitted from the first DU 10 to the second DU 20 may refer to a value obtained by summing a 1-1st transmission time 1370-1 when the PING message is transmitted from a first schedule coordinator 1320 to a first scale agent 1330, a 1-2nd transmission time 1370-2 when the PING message is transmitted from the first scale agent 1330 to a second scale agent 1360, and a 1-3rd transmission time 1370-3 when the PING message is transmitted from the second scale agent 1360 to a second schedule coordinator 1350.

In an embodiment, the information about the time when the response message to the PING message is transmitted from the second DU 20 to the first DU 10 may refer to a value obtained by summing a 2-1st transmission time 1380-1 when the response message is transmitted from the second schedule coordinator 1350 to the second scale agent 1360, a 2-2nd transmission time 1380-2 when the response message is transmitted from the second scale agent 1360 to the first scale agent 1330, and a 2-3rd transmission time 1380-3 when the response message is transmitted from the first scale agent 1330 to the first schedule coordinator 1320.

In an embodiment, the synchronization time information may be determined by using [Equation 2]. Synchronization time information = Time point when radio resource change-requiring event occurs + Information about time when PING message is transmitted from first DU 10 to second DU 20 + Information about time when response message to PING message is transmitted from second DU 20 to first DU 10

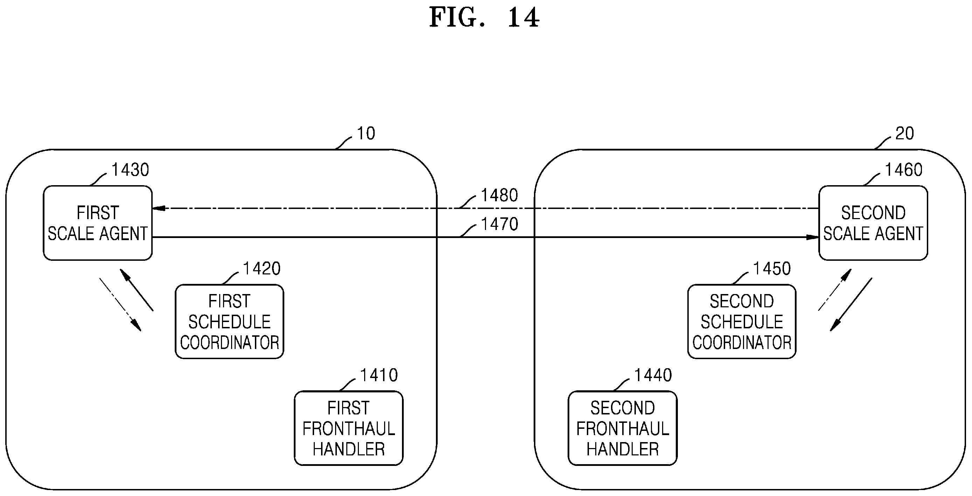

FIG. 14 is a diagram for describing synchronization time information determined by a second DU in response to a request from a first DU, according to an embodiment.

A first schedule coordinator 1420 may transmit, to a second schedule coordinator 1450, a request message 1470 for requesting synchronization time information for applying changed radio resource allocation information, including information about a time resource currently being processed by the first DU 10. For example, the information about the time resource currently being processed by the first DU 10 may include at least one of frame information or slot information corresponding to the time resource currently being processed. For example, to set a time point for applying the changed radio resource allocation information, the first schedule coordinator 1420 may transmit the request message 1470 including the information about the time resource currently being processed (e.g., information indicating (Frame, Slot) = (273,14)).

The second schedule coordinator 1450 may determine synchronization time information for applying the changed radio resource allocation information, based on the information about the time resource currently being processed by the first DU 10, and information about a time resource currently being processed by the second DU 20. For example, the information about the time resource currently being processed by the second DU 10 may include at least one of frame information or slot information corresponding to the information about the time resource currently being processed by the second DU 20. For example, the second schedule coordinator 1450 may identify time difference information (e.g., 7 slots) between information about a time resource (e.g., (Frame, Slot) = (273,14)) received from the first DU 10 and the information about the time resource currently being processed by the second DU 10 (e.g., (Frame, Slot) = (274,1)). Based on the time difference information (e.g., 7 slots), the second schedule coordinator 1450 may determine the synchronization time information to be 14 slots later (e.g., (Frame, Slot) = (274,15)), considering the roundtrip time of the message.

The second schedule coordinator 1450 may transmit, to the first schedule coordinator 1420, synchronization time information 1480 determined by the second DU 10. For example, the synchronization time information may include at least one of frame information or slot information corresponding to a time resource for applying the changed radio resource allocation information.

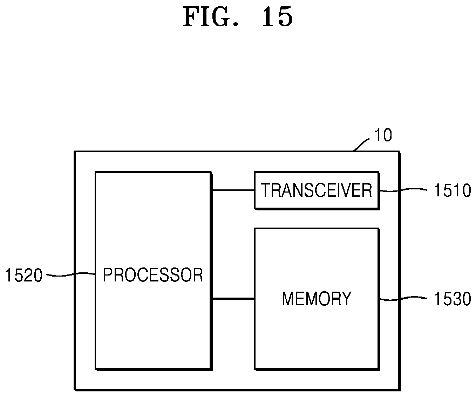

FIG. 15 is a block diagram illustrating a configuration of a first DU.

The first DU 10 may include a transceiver 1510, a processor 1520, and a memory 1530. The components of the first DU 10 are not limited to the above examples. For example, the first DU 10 may include more or fewer components than the above-described components. In an embodiment, the transceiver 1510, the processor 1520, and the memory 1530 may be implemented as a single chip. In addition, the processor 1520 may include one or more processors.

The transceiver 1510 refers to both a receiving unit and a transmitting unit of the first DU 10, and may transmit and receive signals to and from the second DU 20 or the RU 30. Signals transmitted to and received from the second DU 20 or the RU 30 may include control information and data. To this end, the transceiver 1510 may include a radio-frequency (RF) transmitter that up-converts and amplifies the frequency of a signal being transmitted, and an RF receiver that performs low-noise amplification and down-converts the frequency of a received signal. However, this is merely an embodiment of the transceiver 1510, and the components of the transceiver 1510 are not limited to the RF transmitter and the RF receiver.

In addition, the transceiver 1510 may perform functions for transmitting and receiving signals through a radio channel. For example, the transceiver 1510 may receive a signal through a radio channel and output the received signal to the processor 1520, and may transmit a signal output from the processor 1520 through a radio channel.

The memory 1530 may store programs and data required for the operation of the first DU 10. In addition, the memory 1530 may store control information or data included in a signal obtained by the device. The memory 1530 may include a storage medium such as read-only memory (ROM), random-access memory (RAM), a hard disk, a compact disc (CD) ROM (CD-ROM), or a digital video disc (DVD), or a combination of storage media. In addition, the memory 1530 may not be a separate component but may be included in the processor 1520. The memory 1530 may include a volatile memory, a nonvolatile memory, or a combination of a volatile memory and a nonvolatile memory. In addition, the memory 1530 may provide data stored therein upon a request from the processor 1520.

The processor 1520 may control a series of operations to allow the first DU 10 to operate according to the above-described embodiments of the present disclosure. For example, the processor 1520 may receive a control signal and a data signal through the transceiver 1510 and process the received control signal and data signal. The processor 1520 may transmit the processed control signal and data signal through the transceiver 1510. In addition, the processor 1520 may write or read data to or from the memory 1530. The processor 1520 may perform functions of a protocol stack required by a communication standard. To this end, the processor 1520 may include at least one processor or microprocessor. In an embodiment, the processor 1520 or a part of the transceiver 1510 may be referred to as a communication processor (CP).

The processor 1520 may include one or more processors. In this case, the one or more processors may be a general-purpose processor, such as a central processing unit (CPU), an application processor (AP), or a digital signal processor (DSP), a dedicated graphics processor such as a graphics processing unit (GPU) or a vision processing unit (VPU), or a dedicated artificial intelligence processor such as a neural processing unit (NPU). For example, in a case in which the one or more processors are dedicated artificial intelligence processors, the dedicated artificial intelligence processor may be designed with a hardware structure specialized for processing a particular artificial intelligence model.

The at least one processor 1520 may monitor radio resource allocation status information allocated to the first DU 10.

In an embodiment, the at least one processor 1520 may determine changed radio resource allocation information based on the radio resource allocation status information.

When time points when the first DU 10 and the second DU 20 apply the changed radio resource allocation information are different from each other, a situation may occur in which both the first DU 10 and the second DU 20 do not use radio resources or use a partial radio resource region at the same time. This leads to communication quality degradation and results in inefficient use of radio resources. According to an embodiment, it is possible to provide an effect that radio resources are allocated without wasted resources, considering the amounts of data processed by the first DU 10 and the second DU 20.

In an embodiment, at least one processor 1520 may identify synchronization time information for applying the changed radio resource allocation information.

In an embodiment, the synchronization time information corresponds to preset time information, and the preset time information may include at least one of frame information or slot information that is preset for synchronization. According to an embodiment, synchronization time information that reflects a delay value in consideration of a network environment in which DUs are installed may be provided.

In an embodiment, the synchronization time information may be identified based on information about a time when a PING message is transmitted from the first DU 10 to the second DU 20, and information about a time when a response message to the PING message is transmitted from the second DU 20 to the first DU 10. According to an embodiment, synchronization time information that reflects a dynamically measured minimum delay value may be provided.

In an embodiment, the at least one processor 1520 may transmit, to the second DU 20, a request message including information about a current time resource processed by the first DU 10. The at least one processor 1520 may receive the synchronization time information from the second DU 20 based on the request message. The synchronization time information may be identified based on the information about the current time resource processed by the first DU 10, and information about a current time resource processed by the second DU 20. According to an embodiment, synchronization time information considering operations of the second DU 20 and the first DU 10 may be provided.

In an embodiment, the at least one processor 1520 may control the transceiver 1510 to transmit, to the second DU 20, a message for synchronization including the synchronization time information and the changed radio resource allocation information.

According to an embodiment, for signals other than common signals, the changed radio resource allocation information may be flexibly processed in various forms, and thus may be applied to various systems.

In an embodiment, the changed radio resource allocation information may include bitmap information indicating at least one second DU resource 910 allocated to the second DU 20, and at least one first DU resource 920 allocated to the first DU 10. According to an embodiment, the bitmap information may provide an effect of enabling diverse and detailed allocation of resources to DUs.

In an embodiment, the changed radio resource allocation information may include information about one or more resource regions allocated to the first DU 10 or the second DU 20. The information about the one or more resource regions may include information about the number of one or more resource regions 1031, 1032, 1033, 1034, 1035, and 1036, and position information about points constituting the one or more resource regions. According to an embodiment, a method using information about one or more resource regions may provide an effect of allocating resources to DUs in various ways, while simultaneously reducing the size of a message for synchronization and the time required for synchronization.

In an embodiment, the changed radio resource allocation information may include the reference value 1110 corresponding to an integer value that separates resources allocated to the first DU 10 and resources allocated to the second DU 20. According to an embodiment, a method using a reference value may provide an effect of significantly reducing the size of a message for synchronization and significantly reducing the time required for synchronization.

In an embodiment, the at least one processor 1520 may perform transmission or reception of a message with the RU 30 connected to the first DU 10 and the second DU 20, based on the message for synchronization.

According to an embodiment, because the synchronization time information is included for each changed radio resource allocation information, the module performing the corresponding operation may easily and quickly identify when to apply the changed radio resource allocation information, simply by checking the synchronization time information (e.g., the 'time[2]' field) included in the message for synchronization.

In an embodiment, the message for synchronization may further include common signal indication information. The common signal indication information may be information indicating whether the first DU 10 is to process a common signal. According to an embodiment, because the message for synchronization includes the common signal indication information, it is not necessary to share information about a common signal, which has a complex structure, between servers (or nodes). That is, encoding and decoding processes for constructing the data structure for information about a common signal may be omitted. In addition, information such as a slot-by-slot schedule pattern for information about a common signal does not need to be shared between DUs.

In an embodiment, the synchronization time information may include at least one of frame information or slot information for applying the changed radio resource allocation information.

The fronthaul handler module 254 of the RU 30 may not be able to determine which region is valid among packets transmitted by the first DU 10 and the second DU 20. Thus, the fronthaul handler needs to obtain the current status of air resources used by the MAC scheduler of each DU, in order to transmit or receive necessary packets to or from the RU.

According to an embodiment, it is possible to provide an effect that, during scaling (scale-in or scale-out), the MAC scheduler modules and the fronthaul handler modules of the first DU 10 and the second DU 20 apply the changed radio resource allocation information at the same time.

According to an embodiment, the MAC scheduler modules may prevent the first DU 10 and the second DU 20 from using the same radio resource region, thereby providing stable communication.

According to an embodiment, because there are no unused regions by both the first DU 10 and the second DU 20, scheduling may be performed without wasting radio resources.

According to an embodiment, the fronthaul handler module may distinguish between data to be transmitted and data to be received according to radio resources, and may apply radio resource information at the same time with the MAC scheduler module, and thus, it is possible to provide an effect that the amount of data to be transmitted and received between the DUs and the RU 30 may be optimized.

According to an embodiment, because the first DU 10 and the second DU 20 transmit, to the RU 30, only packets corresponding to the positions of radio resources used by the first DU 10 and the second DU 20 based on the changed radio resource allocation information, even when the packets are received as is and then transmitted to UEs, there is no mutual interference between the UEs of the first DU 10 and the second DU 20.

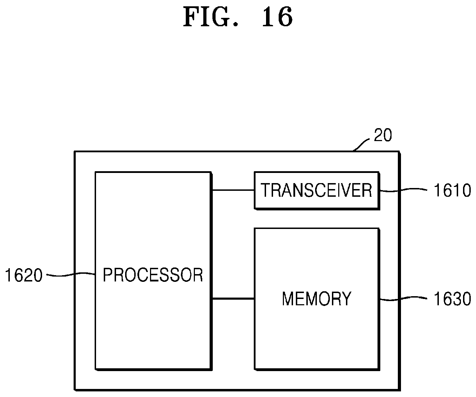

FIG. 16 is a block diagram illustrating a configuration of a second DU.

The second DU 20 may include a transceiver 1610, a processor 1620, and a memory 1630. The components of the second DU 20 are not limited to the above examples. For example, the second DU 20 may include more or fewer components than the above-described components. In an embodiment, the transceiver 1610, the processor 1620, and the memory 1630 may be implemented as a single chip. In addition, the processor 1620 may include one or more processors.

The transceiver 1610 refers to both a receiving unit and a transmitting unit of the second DU 20, and may transmit and receive signals to and from the first DU 10 or the RU 30. Signals transmitted to and received from the first DU 10 or the RU 30 may include control information and data. To this end, the transceiver 1610 may include an RF transmitter that up-converts and amplifies the frequency of a signal being transmitted, and an RF receiver that performs low-noise amplification and down-converts the frequency of a received signal. However, this is merely an embodiment of the transceiver 1610, and the components of the transceiver 1610 are not limited to the RF transmitter and the RF receiver.

In addition, the transceiver 1610 may perform functions for transmitting and receiving signals through a radio channel. For example, the transceiver 1610 may receive a signal through a radio channel and output the received signal to the processor 1620, and may transmit a signal output from the processor 1620 through a radio channel.

The memory 1630 may store programs and data required for the operation of the second DU 20. In addition, the memory 1630 may store control information or data included in a signal obtained by the device. The memory 1630 may include a storage medium such as ROM, RAM, a hard disk, a CD-ROM, or a DVD, or a combination of storage media. In addition, the memory 1630 may not be a separate component but may be included in the processor 1620. The memory 1630 may include a volatile memory, a nonvolatile memory, or a combination of a volatile memory and a nonvolatile memory. In addition, the memory 1630 may provide data stored therein upon a request from the processor 1620.

The processor 1620 may control a series of operations to allow the second DU 20 to operate according to the above-described embodiments of the present disclosure. For example, the processor 1620 may receive a control signal and a data signal through the transceiver 1610 and process the received control signal and data signal. The processor 1620 may transmit the processed control signal and data signal through the transceiver 1610. In addition, the processor 1620 may write or read data to or from the memory 1630. The processor 1620 may perform functions of a protocol stack required by a communication standard. To this end, the processor 1620 may include at least one processor or microprocessor. In an embodiment, the processor 1620 or a part of the transceiver 1610 may be referred to as a CP.

The processor 1620 may include one or more processors. In this case, the one or more processors may be a general-purpose processor, such as a CPU, an AP, or a DSP, a dedicated graphics processor such as a GPU or a VPU, or a dedicated artificial intelligence processor such as an NPU. For example, in a case in which the one or more processors are dedicated artificial intelligence processors, the dedicated artificial intelligence processor may be designed with a hardware structure specialized for processing a particular artificial intelligence model.

In an embodiment, the at least one processor 1620 may receive, from the first DU 10, a message for synchronization including changed radio resource allocation information and synchronization time information for applying the changed radio resource allocation information.

In an embodiment, the synchronization time information for applying the changed radio resource allocation information may be identified based on radio resource allocation status information allocated to the first DU. The synchronization time information may include at least one of frame information or slot information for applying the changed radio resource allocation information.

In an embodiment, the message for synchronization may further include common signal indication information. The common signal indication information may be information indicating whether the first DU 10 is to process a common signal.

In an embodiment, the changed radio resource allocation information may include bitmap information indicating at least one second DU resource 910 allocated to the second DU 20, and at least one first DU resource 920 allocated to the first DU 10.

In an embodiment, the changed radio resource allocation information may include information about one or more resource regions allocated to the first DU 10 or the second DU 20. The information about the one or more resource regions may include information about the number of one or more resource regions 1031, 1032, 1033, 1034, 1035, and 1036, and position information about points constituting the one or more resource regions.

In an embodiment, the changed radio resource allocation information may include a reference value 1110 corresponding to an integer value that separates resources allocated to the first DU 10 and resources allocated to the second DU 20.

In an embodiment, the synchronization time information may correspond to preset time information. The preset time information may include at least one of preset frame information or slot information for synchronization.

In an embodiment, the synchronization time information may be identified based on information about a time point when a PING message is transmitted from the first DU 10 to the second DU 20, and information about a time point when a response message to the PING message is transmitted from the second DU 20 to the first DU 10.

In an embodiment, at least one processor 1620 may identify synchronization time information for applying the changed radio resource allocation information. The at least one processor 1620 may receive, from the first DU 10, a request message including information about a current time resource processed by the first DU 10. The at least one processor 1620 may identify the synchronization time information based on the information about the current time resource processed by the first DU 10, and information about a current time resource processed by the second DU 20. The at least one processor 1620 may transmit the synchronization time information to the first DU 10 based on the request message.

In an embodiment, the at least one processor 1620 may perform transmission or reception of a message with the RU 30 connected to the first DU 10 and the second DU 20, based on the message for synchronization.

In an embodiment, a computer-readable recording medium having recorded thereon a program for causing a computer to execute the method of operating the first DU 10 and the method of operating the second DU 20 described above may be provided.

A machine-readable storage medium may be provided in the form of a non-transitory storage medium. Here, the term 'non-transitory storage medium' refers to a tangible device and does not include a signal (e.g., an electromagnetic wave), and the term 'non-transitory storage medium' does not distinguish between a case where data is stored in a storage medium semi-permanently and a case where data is stored temporarily. For example, the 'non-transitory storage medium' may include a buffer in which data is temporarily stored.

According to an embodiment, methods according to various embodiments disclosed herein may be included in a computer program product and then provided. The computer program product may be traded as commodities between sellers and buyers. The computer program product may be distributed in the form of a machine-readable storage medium (e.g., a CD-ROM), or may be distributed online (e.g., downloaded or uploaded) through an application store or directly between two user devices (e.g., smart phones). In a case of online distribution, at least a portion of the computer program product (e.g., a downloadable app) may be temporarily stored in a machine-readable storage medium such as a manufacturer's server, an application store's server, or a memory of a relay server.

## Claims

1. A method of operating a first distributed unit (DU) (10) in a wireless network system, the method comprising:
monitoring radio resource allocation status information allocated to the first DU (10) (S310);
determining changed radio resource allocation information based on the radio resource allocation status information (S320);
identifying synchronization time information for applying the changed radio resource allocation information (S330);
transmitting, to a second DU (20), a message for synchronization comprising the synchronization time information and the changed radio resource allocation information (S340); and
performing, based on the message for synchronization, transmission or reception of a message with a radio unit (RU) (30) connected to the first DU (10) and the second DU (20) (S350).

2. The method of claim 1, wherein the message for synchronization further comprises common signal indication information,
the synchronization time information comprises at least one of frame information or slot information for applying the changed radio resource allocation information, and
the common signal indication information is information indicating whether the first DU (10) is to process a common signal.

3. The method of any one of claims 1 and 2, wherein the changed radio resource allocation information comprises bitmap information indicating at least one second DU resource (910) allocated to the second DU (20), and at least one first DU resource (920) allocated to the first DU (10).

4. The method of any one of claims 1 and 2, wherein the changed radio resource allocation information comprises information about one or more resource regions allocated to the first DU (10) or the second DU (20), and
the information about the one or more resource regions comprises information about the number of one or more resource regions (1031, 1032, 1033, 1034, 1035, and 1036), and position information about points constituting the one or more resource regions.

5. The method of any one of claims 1 and 2, wherein the changed radio resource allocation information comprises a reference value (1110) corresponding to an integer value that separates resources allocated to the first DU (10) and resources allocated to the second DU (20).

6. The method of any one of claims 1 to 5, wherein the synchronization time information corresponds to preset time information, and
the preset time information comprises at least one of frame information or slot information that is preset for synchronization.

7. The method of any one of claims 1 to 5, wherein the synchronization time information is identified based on information about a time when a packet internet groper (PING) message is transmitted from the first DU (10) to the second DU (20), and information about a time when a response message to the PING message is transmitted from the second DU (20) to the first DU (10).

8. A method of operating a second distributed unit (DU) (20) in a wireless network system, the method comprising:
receiving, from a first DU (10), a message for synchronization comprising changed radio resource allocation information and
synchronization time information for applying the changed radio resource allocation information (S410); and
performing, based on the message for synchronization, transmission or reception of a message with a radio unit (RU) (30) connected to the first DU (10) and the second DU (20) (S420),
wherein the synchronization time information for applying the changed radio resource allocation information is identified based on radio resource allocation status information allocated to the first DU.

9. The method of claim 8, wherein the message for synchronization further comprises common signal indication information,
the synchronization time information comprises at least one of frame information or slot information for applying the changed radio resource allocation information, and
the common signal indication information is information indicating whether the first DU (10) is to process a common signal.

10. The method of any one of claims 8 and 9, wherein the changed radio resource allocation information comprises bitmap information indicating at least one second DU resource (910) allocated to the second DU (20), and at least one first DU resource (920) allocated to the first DU (10).

11. The method of any one of claims 8 and 9, wherein the changed radio resource allocation information comprises information about one or more resource regions allocated to the first DU (10) or the second DU (20), and
the information about the one or more resource regions comprises information about the number of one or more resource regions (1031, 1032, 1033, 1034, 1035, and 1036), and position information about points constituting the one or more resource regions.

12. The method of any one of claims 8 and 9, wherein the changed radio resource allocation information comprises a reference value (1110) corresponding to an integer value that separates resources allocated to the first DU (10) and resources allocated to the second DU (20).

13. The method of any one of claims 8 to 12, wherein the synchronization time information corresponds to preset time information, and
the preset time information comprises at least one of frame information or slot information that is preset for synchronization.

14. The method of any one of claims 8 to 12, further comprising identifying the synchronization time information for applying the changed radio resource allocation information,
wherein the identifying of the synchronization time information comprises:
receiving, from the first DU (10), a request message comprising information about a current time resource processed by the first DU (10);
identifying the synchronization time information based on the information about the current time resource processed by the first DU (10), and information about a current time resource processed by the second DU (20); and
transmitting, to the first DU (10), the synchronization time information based on the request message.

15. A method of operating a first distributed unit (DU) (10) in a wireless network system, the method comprising:
a transceiver (1510); and
at least one processor (1520) operatively connected to the transceiver (1510),
wherein the at least one processor (1520) is configured to monitor radio resource allocation status information allocated to the first DU (10), determine changed radio resource allocation information based on the radio resource allocation status information, identify synchronization time information for applying the changed radio resource allocation information, control the transceiver (1510) to transmit, to a second DU (20), a message for synchronization comprising the synchronization time information and the changed radio resource allocation information, and perform, based on the message for synchronization, transmission or reception of a message with a radio unit (RU) (30) connected to the first DU (10) and the second DU (20).
